# EUROPÄISCHE PATENTSCHRIFT

(11) **EP 1 701 817 B1**
(45) Veröffentlichungstag und Bekanntmachung des Hinweises auf die Patenterteilung: **13.08.2008**
(21) Anmeldenummer: 04802966.4
(22) Anmeldetag: 21.12.2004
(51) Int. Cl.: B23Q 11/10, B23P 15/00, B23P 15/02, B24B 31/116, B23P 9/00, C22F 1/18, B24C 1/00

(54) **VERFAHREN ZUR HERSTELLUNG BZW. BEARBEITUNG VON GASTURBINENBAUTEILEN**
METHOD FOR PRODUCING OR PROCESSING GAS TURBINE COMPONENTS
PROCEDE POUR FABRIQUER OU FAÇONNER DES COMPOSANTS DE TURBINE À GAZ

(30) Priorität: 09.01.2004 DE 102004001394
(43) Veröffentlichungstag der Anmeldung: 20.09.2006
(73) Patentinhaber: MTU Aero Engines GmbH, 80995 München (DE)
(72) Erfinder: KOTZBACHER, Thorben, 80999 München (DE); STEINHARDT, Erich, 81377 München (DE)
(86) Internationale Anmeldenummer: PCT/DE2004/002780
(87) Internationale Veröffentlichungsnummer: WO 2005/065885

(56) Entgegenhaltungen:
- EP-A- 1 340 587
- WO-A-97/05989
- WO-A-99/12665
- WO-A-03/055641
- DE-A1- 4 221 702
- DE-A1- 19 533 579
- US-A- 5 341 602
- DATABASE WPI Section PQ, Week 199436 Derwent Publications Ltd., London, GB; Class P61, AN 1994-292097 XP002329772 -& RU 2 009 864 C1 (ENGINES PRODN TECH ORG RES INST) 30. März 1994 (1994-03-30)
- PATENT ABSTRACTS OF JAPAN Bd. 1998, Nr. 10, 31. August 1998 (1998-08-31) -& JP 10 137820 A (HITACHI LTD), 26. Mai 1998 (1998-05-26)
- PATENT ABSTRACTS OF JAPAN Bd. 2000, Nr. 09, 13. Oktober 2000 (2000-10-13) -& JP 2000 158344 A (NSK LTD), 13. Juni 2000 (2000-06-13)

## Beschreibung

Die Erfindung betrifft ein Verfahren zur Herstellung bzw. Bearbeitung von Gasturbinenbauteilen gemäß den Oberbegriffen der unabhängigen Ansprüche 1 und 6.

Moderne Gasturbinen, insbesondere Flugtriebwerke, müssen höchsten Ansprüchen im Hinblick auf Zuverlässigkeit, Gewicht, Leistung, Wirtschaftlichkeit und Lebensdauer gerecht werden. In den letzten Jahrzehnten wurden insbesondere auf dem zivilen Sektor Flugtriebwerke entwickelt, die den obigen Anforderungen voll gerecht werden und ein hohes Maß an technischer Perfektion erreicht haben. Bei der Entwicklung von Flugtriebwerken spielt unter anderem die Werkstoffauswahl, die Suche nach neuen, geeigneten Werkstoffen sowie die Suche nach neuen Fertigungsverfahren eine entscheidende Rolle.

Die wichtigsten, heutzutage für Flugtriebwerke oder sonstige Gasturbinen verwendeten Werkstoffe sind Titanlegierungen, Nickellegierungen (auch Superlegierungen genannt) und hochfeste Stähle. Die hochfesten Stähle werden für Wellenteile, Getriebeteile, Verdichtergehäuse und Turbinengehäuse verwendet. Titanlegierungen sind typische Werkstoffe für Verdichterteile. Nickellegierungen sind für die heißen Teile des Flugtriebwerks geeignet.

Als Fertigungsverfahren für Gasturbinenbauteile aus Titanlegierungen, Nickellegierung oder sonstigen Legierungen sind aus dem Stand der Technik in erster Linie das Feingießen sowie Schmieden bekannt. Alle hochbeanspruchten Gasturbinenbauteile, wie zum Beispiel die Schaufeln für einen Verdichter, sind Schmiedeteile. Laufschaufeln und Leitschaufeln der Turbine werden hingegen in der Regel als Feingussteile ausgeführt. Integral beschaufelte Rotoren, wie Blisks (bladed disks) oder Blings (bladed rings) können nach dem Stand der Technik durch Fräsen aus dem Vollen hergestellt werden. Das Fräsen aus dem Vollen findet vor allem bei der Herstellung von Blisks oder Blings aus Titanwerkstoffen Verwendung. Das Fräsen von integral beschaufelten Rotoren aus Nickelwerkstoffen ist wegen der schlechten Zerspanbarkeit des Nickelwerkstoffs problematisch.

Werden zum Beispiel integral beschaufelte Rotoren aus einem Werkstück aus dem Vollen gefräst, so findet in der Regel im Anschluss an das Fräsen noch eine Oberflächenbearbeitung des herausgefrästen Gasturbinenbauteils, vorzugsweise durch Oberflächenhärten bzw. Oberflächenverfestigen, Oberflächenglätten und gegebenenfalls Kantenverrunden, statt. Derartige Oberflächenbearbeitungen könne auch an Feingussteilen oder Schmiedeteile durchgeführt werden.

Nach dem Stand der Technik ist es üblich, das Fräsen auf einer Fräsmaschine durchzuführen, die Oberflächenverfestigung und die Oberflächenglättung auf jeweils separaten Maschinen durch Partikelbeschuss sowie die Kantenverrundung händisch durch Schleifen vorzunehmen. Nach dem Stand der Technik kommt demnach für jeden Herstellschritt bzw. Bearbeitungsschritt eine separate Fertigungsmaschine zum Einsatz. Nach Durchführung eines Fertigungsschritts und zur Ausführung eines nachfolgenden Fertigungsschritts muss dann das Werkstück bzw. das Gasturbinenbauteil auf einer neuen Fertigungsmaschine angeordnet werden. Das mehrfache Wechseln der Fertigungsmaschinen ist zeitaufwendig.

Dokument DE 195 33 579 A1 beschreibt ein Verfahren zur Herstellung von Bauteilen, jedoch nicht von Gasturbinenbauteilen, mit den Schritten des Oberbegriffs des unabhängigen Anspruchs 1. Dokument EP 1 340 587 A2 offenbart ein Verfahren zur Bearbeitung von Gasturbinenbauteilen gemäß dem Oberbegriff des unabhängigen Anspruchs 6. Aus dem Dokument DE 42 21 702 A1 ist ein Verfahren zur Bearbeitung von Bauteilen, jedoch nicht von Gasturbinenbauteilen, mit den Schritten des Oberbegriffs des unabhängigen Anspruchs 6 bekannt, das eine Verfestigung von Oberflächen bzw. Rauhigkeitsveränderungen umfassen kann.

Hiervon ausgehend liegt der vorliegenden Erfindung das Problem zu Grunde, ein neuartiges Verfahren zur Herstellung bzw. Bearbeitung von Bauteilen, insbesondere von Gasturbinenbauteilen, vorzuschlagen. Dieses Problem wird durch die in den unabhängigen Patentansprüchen 1 und 6 definierten Verfahren gelöst.

Nach dem erfindungsgemäßen Verfahren zum Bearbeiten von Gasturbinenbauteilen wie Schaufeln, Schaufelsegmenten oder integral beschaufelten Rotoren für ein Flugtriebwerk, wird das Bauteil einem Oberflächenhärten und einem Oberflächenglätten und ggf, einem Kantenverrunden unterzogen, jeweils auf hydrauli-schem Weg unter Verwendung eines Fuids, insbesondere unter Verwendung von Wasser oder Öl.

Bevorzugte Weiterbildungen der Erfindung ergeben sich aus den Unteransprüchen und der nachfolgenden Beschreibung.

Nach dem erfindungsgemäßen Verfahren zur Bearbeitung von Gasturbinenbauteilen, insbesondere von Schaufeln, Schaufelsegmenten oder integral beschaufelten Rotoren für ein Flugtriebwerk wird das Gasturbinenbauteil einem Oberflächenhärten und einem Oberflächenglätten und ggf einem Kantenverrunden unterzogen, wobei das Oberflächenhärten sowie das Oberflächenglätten sowie das Kantenverrunden jeweils auf hydraulichem Weg unter Verwendung eines Fluids durchgeführt wird. Als Fluid findet insbesondere Wasser oder Öl Verwendung. Vorzugsweise wird das Oberflächenhärten und/oder das Oberflächenglätten und/oder das Kantenverrunden auf derselben Maschine unter Verwendung desselben Fluids durchgeführt. Zur Ausführung unterschiedlichster Bearbeitungsschritte bzw. Fertigungsschritte kann das Bauteil demnach auf einer Maschine verbleiben. Hierdurch verringert sich die Bearbeitungszeit bzw. Fertigungszeit deutlich.

Bei dem erfindungsgemäßen Verfahren zur Herstellung von Gasturbinenbauteilen, vorzugsweise von integral beschaufelten Rotoren, wird ein integral beschaufelter Rotor auf einer Fräsmaschine aus einem bereitgestellten Werkstück aus dem Vollen gefräst. Das sich an das Fräsen anschließende Oberflächenhärten, Oberflächenglätten und ggf. Kantenverrunden des aus dem Werkstück herausgefrästen, integral beschaufelten Rotors wird dann im Sinne der hier vorliegenden Erfindung jeweils unter Verwendung eines zum Fräsen benötigten Schmiermittels bzw. Kühlmittels unmittelbar auf der Fräsmaschine durchgeführt. Zum Oberflächenhärten sowie Oberflächenglätten sowie Kantenverrunden findet demnach die zum Fräsen benötigte Bohrölemulsion Verwendung.

Es liegt demnach im Sinne der hier vorliegenden Erfindung, zumindest das Oberflächenhärten sowie Oberflächenglätten sowie Kantenverrunden bei der Herstellung bzw. Bearbeitung von Gasturbinenbauteilen, wie integral beschaufelten Rotoren, auf einer Maschine kombiniert auf hydraulischem Weg durchzuführen.

Nach einer vorteilhaften Weiterbildung der erfindungsgemäßen Verfahren zum Bearbeiten bzw. Herstellen von Gasturbinenbauteilen wird zum Oberflächenhärten sowie Oberflächenglätten sowie Kantenverrunden jeweils ein Auftreffdruck und/oder eine Auftreffrichtung und/oder ein Auftreffbereich und/oder eine Auftreffgeschwindigkeit des verwendeten Fluids angepasst. Der Auftreffbereich des Fluids kann durch Anpassung eines Strahldurchmessers des auf das Gasturbinenbauteil gerichteten Fluidstrahls beeinflusst werden. Zur Variation der Auftreffrichtung können zur Erzeugung des Fluidstrahls verwendete Düsen in unterschiedlichen Winkeln auf die zu bearbeitenden Oberfläche des Gasturbinenbauteils, insbesondere auf eine zu bearbeitende Schaufeloberfläche, gerichtet werden. Durch die Variation des Auftreffdrucks bzw. der Auftreffrichtung bzw. des Auftreffbereichs bzw. der Auftreffgeschwindigkeit des Fluidstrahls kann eine definierte Oberflächenbearbeitung vorgenommen werden.

Es liegt im Sinne der hier vorliegenden Erfindung, die obigen Parameter während dem Oberflächenhärten sowie Oberflächenglätten sowie Kantenverrunden online zu überwachen und abhängig hiervon die Bearbeitung bzw. Herstellung zu steuern bzw. zu regeln. Hierzu werden Messgeräte bzw. Sensoren verwendet, wie die obigen Parameter bzw. davon abhängige Messgrößen fortlaufend messen und die Messsignale einer Regeleinrichtung zur fortlaufenden Anpassung des Bearbeitungsprozesses bzw. Fertigungsprozesses übermitteln.

Mithilfe der hier vorliegenden Erfindung kann die Bearbeitung bzw. Herstellung von Gasturbinebauteilen, insbesondere von Schaufeln, Schaufelsegmenten sowie integral beschaufelten Rotoren, deutlich vereinfacht und verbessert werden. Durch den Verzicht auf händische Bearbeitungsschritte können reproduzierbare Ergebnisse bereitgestellt werden. Durch die Zusammenfassung mehrerer Bearbeitungsschritte auf einer Maschine kann die Bearbeitungszeit bzw. Fertigungszeit deutlich reduziert werden.

## Patentansprüche

1. Verfahren zur Herstellung von Gasturbinenbauteilen , insbesondere von Schaufeln, Schaufelsegmenten oder integral beschaufelten Rotoren für ein Flugtriebwerk, wobei ein Werkstück bereitgestellt wird, wobei durch Fräsbearbeiten des Werkstücks ein herzustellendes Bauteil bereitgestellt wird, und wobei anschließend das Bauteil auf hydraulischem Wege unter Verwendung eines zum Fräsen benötigten Schmiermittels bzw. Kühlmittels bearbeitet wird,
**dadurch gekennzeichnet,**
**dass** anschließend an die Fräsbearbeitung das aus dem Werkstück herausgefräste Bauteil einem Oberflächenhärten und anschließend an das Oberflächenhärten einem Oberflächenglätten unterzogen wird, jeweils unter Verwendung des zum Fräsen benötigten Schmiermittels bzw. Kühlmittels.

2. Verfahren nach Anspruch 1,
**dadurch gekennzeichnet,**
**dass** das Bauteil anschließend an das Oberflächenglätten einem Kantenverrunden unterzogen wird, ebenfalls unter Verwendung des zum Fräsen benötigten Schmiermittels bzw. Kühlmittels.

3. Verfahren nach Anspruch 1 oder 2,
**dadurch gekennzeichnet,**
**dass** zum Oberflächenhärten und/oder zum Oberflächenglätten und/oder zum Kantenverrunden eine zum Fräsen benötigte Bohrölemulsion verwendet wird.

4. Verfahren nach einem der Ansprüche 1 bis 3,
**dadurch gekennzeichnet,**
**dass** das Fräsen sowie das Oberflächenhärten und/oder das Oberflächenglätten und/oder das Kantenverrunden auf derselben Maschine, vorzugsweise auf einer Fräsmaschine, durchgeführt wird.

5. Verfahren nach einem der Ansprüche 1 bis 4,
**dadurch gekennzeichnet,**
**dass** zum Oberflächenhärten und/oder zum Oberflächenglätten und/oder zum Kantenverrunden jeweils ein Druck und/oder eine Auftreffrichtung und/oder ein Auftreffbereich des Schmiermittels bzw. Kühlmittels auf das Bauteil angepasst wird.

6. Verfahren zur Bearbeitung von Gasturbinenbauteilen, insbesondere von Schaufeln, Schaufelsegmenten oder integral beschaufelten Rotoren für ein Flugtriebwerk, wobei das Bauteil auf hydraulischem Weg unter Verwendung eines Fluids, insbesondere unter Verwendung von Wasser oder Öl, bearbeitet wird,
**dadurch gekennzeichnet,**
**dass** das Bauteil einem Oberflächenhärten und anschließend an das Oberflächenhärten einem Oberflächenglätten unterzogen wird, jeweils unter Verwendung desselben Fluids.

7. Verfahren nach Anspruch 6,
**dadurch gekennzeichnet,**
**dass** das Bauteil anschließend an das Oberflächenglätten einem Kantenverrunden unterzogen wird, ebenfalls unter Verwendung desselben Fluids.

8. Verfahren nach Anspruch 6 oder 7,
**dadurch gekennzeichnet,**
**dass** das Oberflächenhärten und/oder das Oberflächenglätten und/oder das Kantenverrunden auf derselben Maschine durchgeführt wird.

9. Verfahren nach einem der Ansprüche 6 bis 8,
**dadurch gekennzeichnet,**
**dass** zum Oberflächenhärten und/oder zum Oberflächenglätten und/oder zum Kantenverrunden jeweils ein Druck und/oder eine Auftreffrichtung und/oder ein Auftreffbereich des Fluids auf das Bauteil angepasst wird.

## Claims

1. A method for producing gas-turbine components, in particular blades, blade segments or integrally bladed rotors for an aircraft engine, wherein a workpiece is prepared, wherein a component that is to be produced is prepared by processing the workpiece by milling, and wherein subsequently the component is processed hydraulically with the use of a lubricant or coolant that is required for the milling,
**characterised in that**, subsequently to the processing by milling, the component that has been milled out of the workpiece is subjected to surface-hardening and, subsequently to the surface-hardening, is subjected to surface-smoothing, in each case with the use of the lubricant or coolant that is required for the milling.

2. A method according to claim 1, **characterised in that** subsequently to the surface-smoothing the component is subjected to a rounding of edges, likewise with the use of the lubricant or coolant that is required for the milling.

3. A method according to claim 1 or 2, **characterised in that** a drilling-oil emulsion that is required for the milling is used for the surface-hardening and/or for the surface-smoothing and/or for the rounding of edges.

4. A method according to one of claims 1 to 3, **characterised in that** the milling and also the surface-hardening and/or the surface-smoothing and/or the rounding of edges are/is carried out on the same machine, preferably on a milling machine.

5. A method according to one of claims 1 to 4, **characterised in that** a pressure and/or a direction of impact and/or an area of impact of the lubricant or coolant on the component are/is adapted for the surface-hardening and/or for the surface-smoothing and/or for the rounding of edges respectively.

6. A method for processing gas-turbine components, in particular blades, blade segments or integrally bladed rotors for an aircraft engine, wherein the component is processed hydraulically with the use of a fluid, in particular with the use of water or oil, **characterised in that** the component is subjected to surface-hardening and subsequently to the surface-hardening is subjected to surface-smoothing, in each case with the use of the same fluid.

7. A method according to claim 6, **characterised in that** subsequently to the surface-smoothing the component is subjected to a rounding of edges, likewise with the use of the same fluid.

8. A method according to claim 6 or 7, **characterised in that** the surface-hardening and/or the surface-smoothing and/or the rounding of edges are/is carried out on the same machine.

9. A method according to one of claims 6 to 8, **characterised in that** a pressure and/or a direction of impact and/or an area of impact of the fluid on the component are/is adapted for the surface-hardening and/or for the surface-smoothing and/or for the rounding of edges respectively.

## Revendications

1. Procédé pour fabriquer des composants de turbine à gaz, en particulier des ailettes, des segments d'ailette ou des rotors intégralement munis d'ailettes pour un groupe motopropulseur, une pièce à usiner étant préparée, un composant à fabriquer étant préparé par fraisage de la pièce à usiner, et le composant étant ensuite façonné par voie hydraulique en utilisant un lubrifiant et/ou un réfrigérant nécessaire au fraisage, **caractérisé en ce que** après le fraisage, le composant fraisé dans la pièce à usiner subit une trempe superficielle et est soumis, suite à la trempe superficielle, à un lissage superficiel, respectivement en utilisant le lubrifiant et/ou le réfrigérant nécessaire au fraisage.

2. Procédé selon la revendication 1, **caractérisé en ce que** le composant subit, suite au lissage superficiel, un arrondissage des bords, également avec utilisation du lubrifiant et/ou réfrigérant nécessaire au fraisage.

3. Procédé selon la revendication 1 ou 2,
**caractérisé en ce que** l'on utilise une émulsion d'huile de forage pour la trempe superficielle et/ou pour le lissage superficiel et/ou pour l'arrondissage des bords.

4. Procédé selon l'une quelconque des revendications 1 à 3, **caractérisé en ce que** le fraisage ainsi que la trempe superficielle et/ou le lissage superficiel et/ou l'arrondissage des bords s'effectuent sur la même machine, de préférence sur une fraiseuse.

5. Procédé selon l'une quelconque des revendications 1 à 4, **caractérisé en ce que** l'on adapte respectivement une pression et/ou une direction d'impact et/ou une zone d'impact du lubrifiant et/ou du réfrigérant sur le composant pour la trempe superficielle et/ou pour le lissage superficiel et/ou pour l'arrondissage des bords.

6. Procédé pour façonner des composants de turbine à gaz, en particulier des ailettes, de segments d'ailette ou des rotors intégralement munis d'ailettes pour un groupe motopropulseur, le composant étant façonné par voie hydraulique avec utilisation d'un fluide, en particulier avec utilisation d'eau ou d'huile, **caractérisé en ce que** le composant subit une trempe superficielle et est soumis, après la trempe superficielle, à un lissage superficiel, respectivement avec utilisation du même fluide.

7. Procédé selon la revendication 6, **caractérisé en ce que** le composant subit, suite au lissage superficiel, un arrondissage des bords, également avec utilisation du même fluide.

8. Procédé selon la revendication 6 ou 7,
**caractérisé en ce que** la trempe superficielle et/ou le lissage superficiel et/ou l'arrondissage des bords s'effectue sur la même machine.

9. Procédé selon l'une quelconque des revendications 6 à 8, **caractérisé en ce que** l'on adapte respectivement une pression et/ou une direction d'impact et/ou une zone d'impact du fluide sur le composant pour la trempe superficielle et/ou pour le lissage superficiel et/ou pour l'arrondissage des bords.
